# EUROPÄISCHE PATENTSCHRIFT

(11) **EP 3 309 437 B1**
(45) Veröffentlichungstag und Bekanntmachung des Hinweises auf die Patenterteilung: **17.02.2021**
(21) Anmeldenummer: 17195836.6
(22) Anmeldetag: 11.10.2017
(51) Int. Cl.: F16L 5/04, A62C 2/06, B23B 5/08, F16L 59/14, F16L 55/033

(54) **BRANDSCHUTZ-MANSCHETTE**
FIRE PROTECTION SLEEVE
MANCHON COUPE-FEU

(30) Priorität: 13.10.2016 DE 102016119555
(43) Veröffentlichungstag der Anmeldung: 18.04.2018
(73) Patentinhaber: Kolektor Insulation GmbH, 70736 Fellbach (DE)
(72) Erfinder: Demmerlé, Patrice, 73635 Rudersberg (DE); Korfant, Michael, 70374 Stuttgart (DE)
(74) Vertreter: Manitz Finsterwald Patent- und Rechtsanwaltspartnerschaft mbB

(56) Entgegenhaltungen:
- WO-A1-00/68608
- DE-A1- 10 043 430
- DE-A1- 10 119 132
- DE-A1-102011 006 211

## Beschreibung

Die vorliegende Erfindung betrifft eine Brandschutz-Manschette nach dem Oberbegriff des Anspruchs 1. Eine solche Brandschutz-Manschette ist aus der DE 10 2011 006 211 A1 bekannt.

Weitere Brandschutz-Manschetten sind aus der EP 1 909 012 A2, der WO 00/68608 A1, der DE 101 19 132 A1 und der DE 100 43 430 A1 bekannt.

Es ist die Aufgabe der vorliegenden Erfindung, eine Brandschutz-Manschette nach dem Oberbegriff des Anspruchs 1 so auszubilden, dass mit dieser bei geringerem Materialverbrauch und damit kostengünstiger Herstellung auch Öffnungen mit großem Innendurchmesser im Brandfall zuverlässig verschlossen werden.

Die Lösung dieser Aufgabe erfolgt durch die Merkmale des Anspruchs 1.

Bei der erfindungsgemäßen Brandschutz-Manschette, die grundsätzlich eine Axialrichtung (parallel zur Mittelachse und zur Achse des Rohrs oder Kanals) und eine Umfangsrichtung sowie eine Innenseite und eine Außenseite definiert, ist durch das zumindest eine Stabilisatorelement aus flexiblem und nicht brennbarem Material dafür gesorgt, dass das Blähmaterial im Brandfall stabilisiert wird, indem eine Verbindung zwischen dem Blähmaterial und dem Stabilisatorelement aus nicht brennbarem Material eingegangen wird. Da das Blähmaterial eine Verbindung mit dem Stabilisatorelement eingeht, verbleibt es nach dem Aufblähen an Ort und Stelle. Da das Stabilisatorelement aus einem flexiblen Material gebildet ist, d.h. kein Blech oder dgl. aufweist, lässt sich die Brandschutzmanschette kostengünstig herstellen und auf bekannte Weise um ein Rohr wickeln.

Erfindungsgemäß weist der Dämmstreifen mehrere Gelenkabschnitte in Form von einzelnen Laschen auf, die umgeschlagen sind. Hierdurch wird eine Faltenbildung im Inneren der Brandschutz-Manschette nach einem Umschlagen des Dämmstreifens verhindert.

Vorteilhafte Ausführungsformen der Erfindung sind in der Beschreibung, der Zeichnung sowie den Unteransprüchen beschrieben.

So kann nach einer ersten Ausführungsform auch der Dämmstreifen nicht brennbares Material aufweisen, wodurch eine einfache Herstellung möglich ist. Im Brandfall klappt der als Stabilisatorelement dienende Gelenkabschnitt in Richtung der Mittelachse auf, da das Blähmaterial diesen in Richtung der Mittelachse bewegt. Gleichzeitig ist jedoch der Gelenkabschnitt an dem außenseitigen Dämmstreifen gehalten, so dass dieser außenseitig verankert ist, was eine Stabilisierung begünstigt.

Nach einer weiteren Ausführungsform kann der Dämmstreifen entlang eines äußeren Randes der Manschette von außen nach innen und um das Blähmaterial umgeschlagen sein, so dass sich dieses über einen bestimmten axialen Bereich zwischen dem äußeren Dämmstreifen und dem umgeschlagenen Bereich des Dämmstreifens befindet. Der umgeschlagene Bereich des Dämmstreifens, der im Inneren der Brandschutz-Manschette liegt, ist jedoch stirnseitig offen, so dass dieser Bereich durch ein Aufblähen des Blähmaterials zurückklappbar ist. Hierdurch wird erreicht, dass das sich im Falle eines Brandes aufblähende Blähmaterial den umgeschlagenen Bereich des Dämmstreifens durch die entstehenden Blähkräfte in Richtung der Rohr- oder Kanalachse zurückklappt, wodurch die Rohr- oder Kanalöffnung durch das zurückgeklappte Dämmmaterial verkleinert wird. Ferner wurde erkannt, dass ein Dämmstreifen mit einem Kern aus nicht brennbarem Material im Brandfall verschmelzen kann, wodurch sich der Kern aus nicht brennbarem Material nach einem Zurückklappen aufgrund der Blähkräfte verfestigt und dadurch ein Widerlager für das aufquellende Blähmaterial bildet, wodurch dieses in der zu verschließenden Rohröffnung zurückgehalten wird. Auf diese Weise kann die Verwendung des vergleichsweise teuren Blähmaterials reduziert werden, was die Herstellungskosten der Brandschutz-Manschette senkt, wobei dennoch Öffnungen mit einem großen Innenquerschnitt zuverlässig verschlossen werden können.

Nach einer weiteren vorteilhaften Ausführungsform kann der Dämmstreifen entlang des gesamten Innenumfangs der Brandschutz-Manschette umgeschlagen sein, wobei der umgeschlagene Bereich beispielsweise unter Faltenbildung fixiert ist. Dies stellt eine einfache Lösung dar, bei der eine Bearbeitung des umgeschlagenen Bereichs nicht weiter erforderlich ist, wobei gleichzeitig nach einem Zurüccklappen des umgeschlagenen Bereichs um beispielsweise 30° bis 150° aufgrund des sich aufblähenden Blähmaterials eine geschlossene Ringfläche gebildet ist, die das Blähmaterial zurückhält und dadurch eine gewisse Barriere gegen das in Axialrichtung nach außen drängende Blähmaterial bildet.

Nach einer weiteren vorteilhaften Ausführungsform kann die axiale Länge des Gelenkabschnitts des Dämmstreifens mindestens 25%, insbesondere mindestens 30%, insbesondere mindestens 40% und insbesondere zumindest 50% der axialen Länge des Blähmaterials betragen. Hierdurch wird sichergestellt, dass im Brandfall eine ausreichend große Fläche in einer Ebene senkrecht zur Mittelachse der Manschette zur Verfügung steht, um das Blähmaterial zurückzuhalten.

Nach einer weiteren vorteilhaften Ausführungsform kann die axiale Länge des Gelenkabschnitts bzw. eines umgeschlagenen Bereichs so gewählt sein, dass dieser den lichten Innenquerschnitt der Manschette nach einem Aufquellen des Blähmaterials um 40%, insbesondere um zumindest 50% verkleinert, wobei letzteres einer Durchmesserreduzierung um etwa 25% entspricht. Hierdurch wird im Brandfall wiederum eine ausreichend große Fläche in einer Ebene senkrecht zur Mittelachse der Manschette zur Verfügung steht, um das Blähmaterial zurückzuhalten.

Nach einer weiteren vorteilhaften Ausführungsform kann die axiale Länge des Gelenkabschnitts des Dämmstreifens nicht mehr als 60%, insbesondere nicht mehr als 50% und bevorzugt nicht mehr als 40% des Innendurchmessers der Brandschutz-Manschette betragen. Durch diese Dimensionierung ist sichergestellt, dass sich der umgeschlagene Bereich durch das Dämmmaterial im Brandfall zuverlässig zurückklappen lässt, wobei nach einem Aushärten des nicht brennbaren Materials eine ausreichend große Fläche in einer Ebene quer zur Achse der Brandschutz-Manschette vorhanden ist, um das Dämmmaterial zurückzuhalten.

Nach einer weiteren vorteilhaften Ausführungsform kann der Gelenkabschnitts des Dämmstreifens nach einem Zurückklappen Abschnitte aufweisen, die überlappen. Beispielsweise kann der umgeschlagene Bereich aus mehreren Streifen bestehen, die nach einem Zurückklappen in Richtung einer Querschnittsebene überlappende Randbereiche aufweisen.

Wenn ein überlappender Randbereich vermieden werden soll, so können nach einer weiteren vorteilhaften Ausführungsform die Gelenkabschnitte des Dämmstreifens nach einem Zurückklappen einen aus seitlich aneinandergrenzenden Abschnitten gebildeten Bereich bilden. Dies kann beispielsweise dadurch erreicht werden, dass die Gelenkabschnitte aus einzelnen Laschen in Dreieckform besteht, die nach einem Zurückklappen um einen geschlossenen Ringstreifen bilden.

Alternativ ist es möglich, die Gelenkabschnitte bzw. einen umgeschlagenen Bereich des Dämmstreifens aus seitlich beabstandeten Laschen zu bilden.

Der Gelenkabschnitt kann sich nach einer weiteren Ausführungsform nicht über die gesamte axiale Länge des sich üblicherweise über den gesamten Innenumfang der Brandschutz-Manschette erstreckenden Blähmaterials erstrecken.

Nach einer vorteilhaften Ausführungsform weist das nicht brennbare Material ein Fasermaterial und insbesondere einen Vlies auf. Beispielsweise kann als nicht brennbares Material eine Mineralfaser, insbesondere eine Silikatfaser vorgesehen werden, die bis ca. 1100°C hitzebeständig ist, die jedoch oberhalb einer Temperatur in diesem Bereich aushärtet und dadurch ein Widerlager für das Blähmaterial bildet. Als alternative Materialien kommen andere nicht brennbare Baustoffe in Frage, die auch in brennbare Hüllstoffe gepackt sein können.

Nach einer weiteren Ausführungsform kann die Brandschutz-Manschette zumindest einen Gelenkabschnitt aufweisen, der um eine parallel zur Mittelachse verlaufende Gelenkachse klappbar ist. Bei dieser Ausführungsform öffnet sich der als Stabilisatorelement dienende Gelenkabschnitt nach Art eines Fensterflügels und trägt so zur Stabilisierung bei. Alternativ oder zusätzlich ist es möglich, Stabilisatorelemente vorzusehen, die um eine in Umfangsrichtung verlaufende Schwenkachse verschwenkbar sind. Hierdurch kann auf der Innenseite des Blähmaterials nicht brennbares Material vorgesehen werden, das Radialöffnungen aufweist, die von einem oder mehreren Gelenkabschnitten verschlossen sind. Eine vorteilhafte Anordnung kann dadurch geschaffen werden, dass die Radialöffnung nach Art eines dreiflügligen Fensters verschlossen wird, wobei zwei Flügel durch Gelenkabschnitte mit in Axialrichtung verlaufenden Schwenkachsen und ein Flügel durch einen Gelenkabschnitt mit einer in Umfangsrichtung verlaufenden Schwenkachse gebildet ist.

Nach einer weiteren vorteilhaften Ausführungsform kann das zumindest eine Stabilisatorelement durch einen insbesondere wellenförmigen Streifen gebildet sein, der an der Innenseite des Blähmaterials befestigt ist, und der sich insbesondere zumindest überwiegend in Umfangsrichtung erstreckt. Derartige streifenförmige Stabilisatorelemente bewirken beim Aufblähen einen besonders guten Zusammenhalt des Blähmaterials und wirken gleichzeitig als eine gewisse Barriere gegen ein Ausbreiten des Blähmaterials in axialer Richtung.

Die erfindungsgemäße Brandschutz-Manschette (abgesehen von optionalen Heftklammern) weist keine metallischen Teile und insbesondere keinen

Blechmantel oder Blechklappen auf, da die auftretenden Blähkräfte einerseits von dem umgebenden Mauerwerk und andererseits von dem Stabilisatorelement aufgenommen werden, das für einen Zusammenhalt des aufgeblähten Blähmaterials sorgt.

Das verwendete Blähmaterial kann so gewählt sein, dass es sein Volumen um das 2-fache, 10-fache, 20-fache oder auch 40-fache vergrößert, wobei das Blähmaterial aus einem Stück bestehen kann oder mehrere übereinandergelegte Lagen umfassen kann. Auch kann das Blähmaterial einzeln nebeneinander geordnete Abschnitte aufweisen, die beabstandet oder ohne Abstand nebeneinander angeordnet sind. Die Dicke des Blähmaterials kann über den Umfang gesehen oder in Axialrichtung gesehen gleichmäßig sein. Sie kann jedoch auch beim Einsatz von verschiedenen Lagen nebeneinander unterschiedlich sein.

Die erfindungsgemäße Brandschutz-Manschette kann mit einem Verschlussmittel versehen sein, um diese nachträglich an einem Rohr zu montieren. Alternativ kann die Manschette geschlossen aus einem Stück gebildet sein und in Bauteileöffnungen, beispielsweise für Rohre, für Kabel, für Belüftungsöffnungen, für Durchreicheöffnungen, für Förderbänder oder für Kontrollöffnungen oder dergleichen, eingesetzt werden. Grundsätzlich kann die Brandschutz-Manschette eine runde, eine eckige oder eine andere Form aufweisen, die zum Einsetzen in Öffnungen geeignet ist. Alternativ ist es auch möglich, die Manschette aus mehreren Stücken herzustellen, die dann zusammengefügt oder in der Öffnung positioniert werden.

Nachfolgend wird die vorliegende Erfindung rein beispielhaft anhand von vorteilhaften Ausführungsformen und unter Bezugnahme auf die beigefügten Zeichnungen beschrieben, wobei für gleiche Komponenten der verschiedenen Ausführungsformen gleiche Bezugszeichen verwendet sind.

Es zeigen:
- Fig. 1: eine perspektivische Ansicht einer ersten Ausführungsform einer Brandschutz-Manschette;
- Fig. 2: eine perspektivische Ansicht einer zweiten Ausführungsform einer Brandschutz-Manschette;
- Fig. 3: eine perspektivische Ansicht einer dritten Ausführungsform einer Brandschutz-Manschette;
- Fig. 4: eine perspektivische Ansicht einer vierten Ausführungsform einer Brandschutz-Manschette;
- Fig. 5: eine perspektivische Ansicht einer fünften Ausführungsform einer Brandschutz-Manschette;
- Fig. 6: eine perspektivische Ansicht einer sechsten Ausführungsform einer Brandschutz-Manschette;
- Fig. 7: eine perspektivische Ansicht einer siebten Ausführungsform einer Brandschutz-Manschette;
- Fig. 8: eine perspektivische Ansicht einer achten Ausführungsform einer Brandschutz-Manschette; und
- Fig. 9: eine perspektivische Ansicht einer neunten Ausführungsform einer Brandschutz-Manschette.

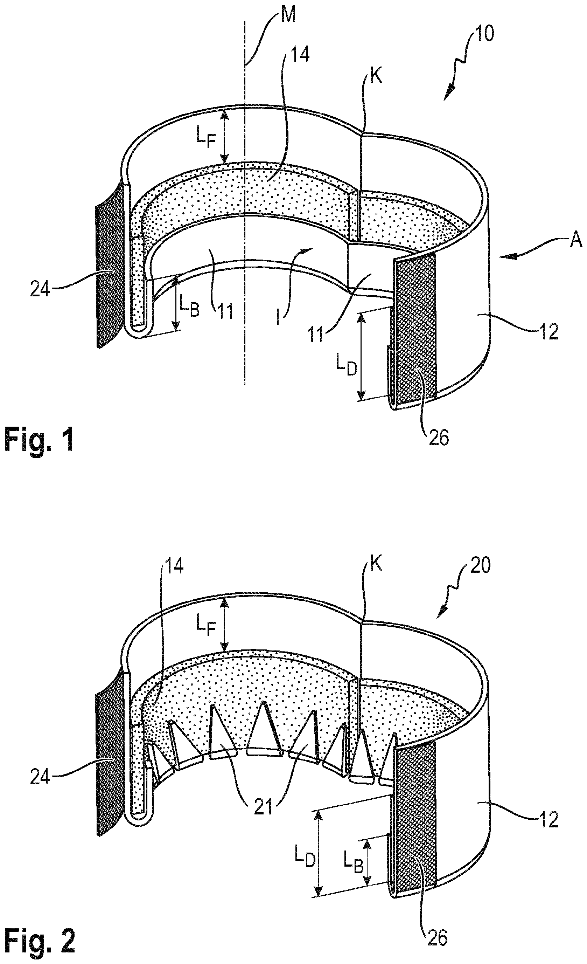

Fig. 1 zeigt eine erste Ausführungsvariante einer Brandschutz-Manschette 10 für Rohre und Kanäle, die (wie alle Ausführungsformen) eine Mittelachse M, eine Innenseite I und eine Außenseite A definiert, und die ein sich bei Hitzeeinwirkung aufblähendes Blähmaterial 14 aufweist. Auf der Innenseite des Blähmaterials 14 ist in einem Randbereich ein Stabilisatorelement in Form von zwei umgeschlagenen Laschen 11 aus nicht brennbarem und flexiblem Material vorgesehen, das im Brandfall das sich aufblähende Blähmaterial stabilisiert.

Die Manschette 10 weist außenseitig einen Dämmstreifen 12 aus insbesondere körperschalldämmendem Dämmmaterial auf, wobei der Dämmstreifen 12 einen Kern aus nicht brennbarem Material, beispielsweise Silikatfaser besitzt. Der Kern aus nicht brennbarem Material ist von einer Schutzhülle umschlossen, die beispielsweise aus einer Kunststofffolie besteht, und die einen reißfesten Überzug aus einer Gewebefolie mit Gitterstruktur aufweisen kann.

Die in Fig. 1 dargestellte Brandschutz-Manschette 10 definiert eine Umfangsrichtung und eine in Richtung der Mittelachse M verlaufende Axialrichtung und bei dem dargestellten Ausführungsbeispiel ist die Brandschutz-Manschette als geteilte Manschette ausgebildet, die eine optionale Knickstelle K aufweist, so dass die Manschette um ein Rohr umgelegt werden kann. Zum Verschließen der Brandschutz-Manschette 10 dient ein Klettverschluss 24, 26.

Auf der Innenseite des Dämmstreifens 12 ist bei der Brandschutz-Manschette 10 das sich bei Hitzeeinwirkung aufblähende Blähmaterial 14 aufgebracht (z.B. durch Kleben), das bei dem dargestellten Ausführungsbeispiel aus mehreren übereinander liegenden Schichten gebildet ist und das entlang der Knickstelle K geteilt ist, um ein Aufklappen der Brandschutz-Manschette mit dem relativ steifen Blähmaterial 14 zu ermöglichen.

Wie Fig. 1 weiter verdeutlicht, ist der Dämmstreifen 12 entlang des unteren Randes der Manschette von der Außenseite A zur Innenseite I nach innen und um das Blähmaterial 14 umgeschlagen, was bei dem dargestellten Ausführungsbeispiel dadurch erleichtert ist, dass in dem umgeschlagenen Bereich zu beiden Seiten der Knickstelle K die beiden Laschen 11 gebildet sind, die als Stabilisatorelement dienen.

Die axiale Länge L_{B} des umgeschlagenen Bereichs des Dämmstreifens 12 ist kleiner als die gesamte axiale Länge L_{D} des Blähmaterials. Bei dem dargestellten Ausführungsbeispiel ist die Länge L_{B} etwa halb so groß wie die Länge L_{D}. Da die axiale Länge L_{D} des Blähmaterials 14 etwa halb so groß ist wie die gesamte axiale Länge des Dämmstreifens 12 im nicht umgeschlagenen Zustand, entspricht die Länge L_{F} eines Bereichs des Dämmstreifens 12, der nicht mit Blähmaterial 14 in Verbindung steht, etwa der Länge L_{B}.

Bei dem in Fig. 1 dargestellten Ausführungsbeispiel ist der Dämmstreifen 12 mit Ausnahme der Einschnitte im Bereich der Knickstelle K und in dem Bereich der Öffnung entlang des gesamten Innenumfangs der Brandschutz-Manschette umgeschlagen, so dass bei dem dargestellten Ausführungsbeispiel insgesamt zwei Laschen 11 gebildet sind, wobei auch eine einzige umlaufende Lasche möglich ist.

Fig. 2 zeigt eine weitere Ausführungsform einer Brandschutz-Manschette 20, wobei dort eine Vielzahl von umgeschlagenen Laschen 21 vorgesehen ist, die mit ihrer Basis leicht beabstandet sind und die dreieckig zugeschnitten sind. Hierdurch ergibt sich nach einem Zurückklappen der Laschen 21 um ca. 90° aufgrund des Aufblähens des Blähmaterials 14 eine annähernd geschlossene Ringfläche, die durch die seitlich aneinander angrenzenden Laschen 21 gebildet ist.

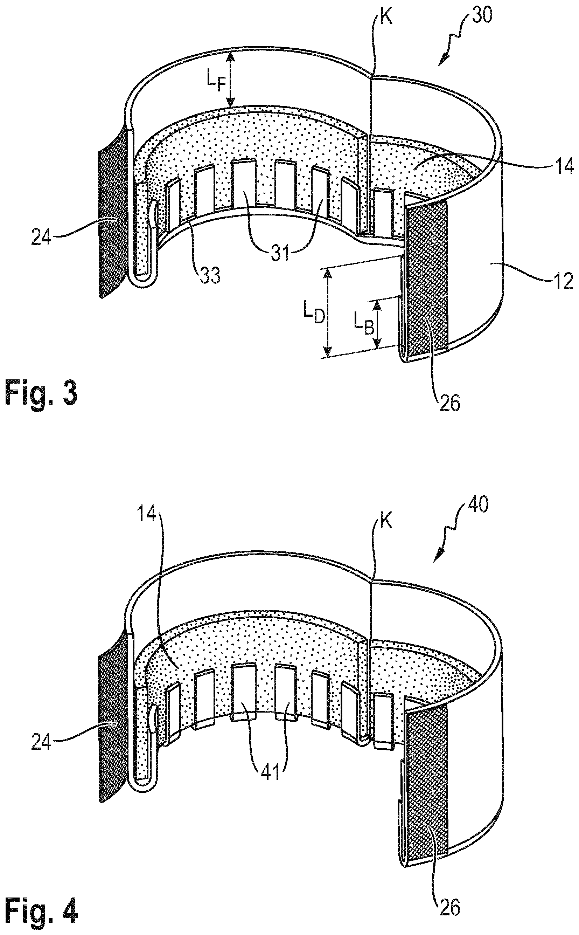

Eine weitere Ausführungsform einer Brandschutz-Manschette 30 ist in Fig. 3 dargestellt. Bei dieser Ausführungsform sind mehrere in Umfangsrichtung voneinander beabstandete Laschen 31 vorgesehen, die einen rechteckigen Zuschnitt besitzen, und die wiederum als Stabilisatorelemente dienen. Wie die Figur erkennen lässt, ist der Dämmstreifen 12 um die benachbarte Stirnseite des Blähmaterials 14 umgeschlagen, so dass die gesamte nach außen weisende Stirnseite des Blähmaterials 14 von dem Dämmstreifen 12 umgeben ist und zwischen jeweils zwei Laschen 31 ein Steg 33 aus Dämmmaterial vorhanden ist.

Für einen besseren Wärmeeintrag für das Blähmaterial kann nach der in Fig. 4 dargestellten Ausführungsform eine Brandschutz-Manschette 40 vorgesehen sein, die ähnlich zu der in Fig. 3 dargestellten Ausführungsform ausgebildet ist, bei der jedoch die Stege 33 aus dem Material des Dämmstreifens 12 zwischen jeweils zwei Laschen 41 weggelassen sind. Hierbei ist zwar jede Lasche 41 um die Stirnseite des Blähmaterials 14 herumgeschlagen. Es befindet sich jedoch zwischen den benachbarten Laschen 41 an der Stirnseite des Blähmaterials kein nicht brennbares Material, d.h. der Bereich zwischen den Laschen 41 liegt in Axialrichtung frei.

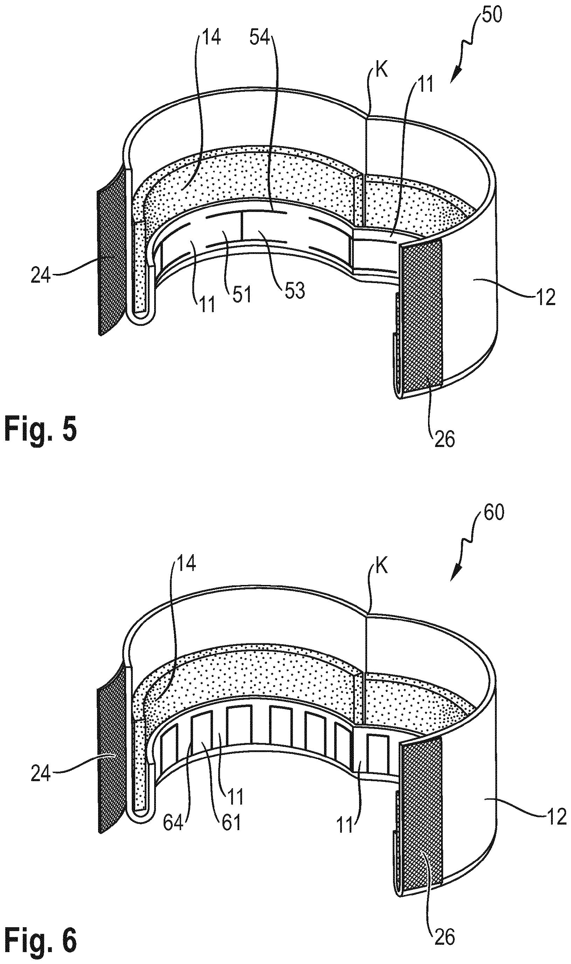

Fig. 5 zeigt eine weitere Ausführungsform einer Brandschutz-Manschette 50, die ähnlich aufgebaut ist wie die in Fig. 1 dargestellte Brandschutz-Manschette 10. Bei der in Fig. 5 dargestellten Ausführungsform sind jedoch in die umgeschlagenen Laschen 11 Schlitze in H-Form eingebracht, wodurch zwischen diesen Schlitzen fensterladenartige Klappelemente 51 und 53 gebildet sind, die jeweils um parallel zur Mittelachse M orientierte Schwenkachsen aufklappbar sind, wenn sich das Blähmaterial 14 aufbläht.

Bei der in Fig. 6 dargestellten Ausführungsform einer Brandschutz-Manschette 60 sind innerhalb der umgeklappten Laschen 11 U-förmige Schlitze 64 eingebracht, durch welche jeweils eine flexible Klapplasche 61 gebildet ist, die um eine in Umfangsrichtung orientierte Schwenkachse aufklappbar ist, um für eine Stabilisierung des aufblähenden Blähmaterials 14 zu sorgen. Auch hier können wie bei der Ausführungsform von Fig. 4 die stirnseitigen Bereiche zwischen den Laschen 61 freiliegen, d.h. nicht von Material bedeckt sein, das nicht brennbar ist.

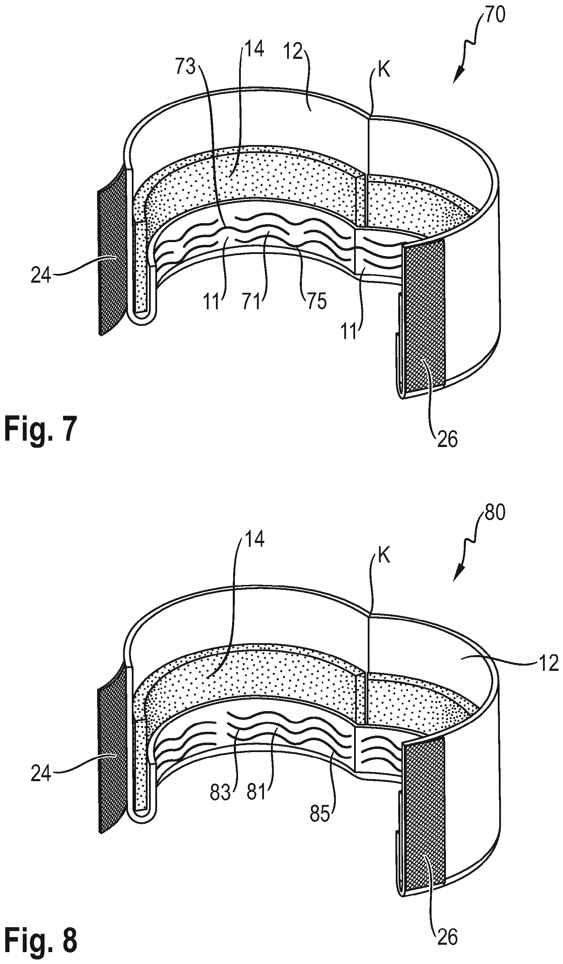

Bei der in Fig. 7 dargestellten Ausführungsform einer Brandschutz-Manschette 70 sind in den gemäß Fig. 1 umgeklappten Laschen 11, die den gesamten Innenumfang der Manschette umgeben, in Umfangsrichtung verlaufende wellenförmige Schlitze 75 und 73 eingebracht, die jedoch in Umfangsrichtung versetzt angeordnet sind, wodurch zwischen den Schlitzen 73 und 75 wiederum flexible Stabilisatorelemente 71 gebildet sind, die im Brandfall beim Aufblähen des Blähmaterials 14 für eine Stabilisierung sorgen.

Fig. 8 zeigt eine zu Fig. 7 ähnliche Ausführungsform einer Brandschutz-Manschette 80, bei der allerdings die Schlitze 73 und 75 in Umfangsrichtung nicht zueinander versetzt angeordnet sind sondern im Wesentlichen parallel zueinander verlaufen und sich jeweils über etwa ein Viertel des Innenumfangs der Manschette erstrecken, so dass zwischen den Schlitzen 83 und 85 ein wellenförmiges Stabilisatorelement 81 gebildet ist.

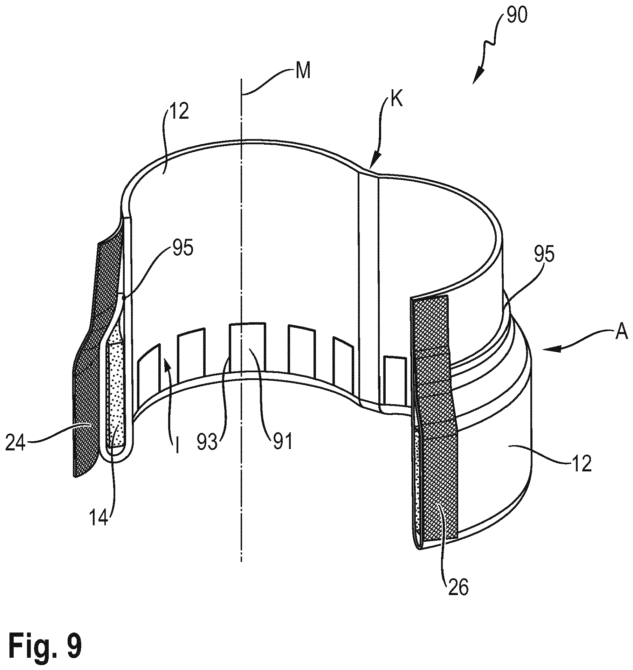

Schließlich zeigt Fig. 9 eine etwas anders ausgeführte Ausführungsform einer Brandschutz-Manschette 90, die wiederum eine Mittelachse, eine Innenseite und eine Außenseite definiert und die ein sich bei Hitzeeinwirkung aufblähendes Blähmaterial 14 aufweist. Bei dieser Ausführungsform ist das streifenförmige Blähmaterial 14 vollständig von einem Dämmstreifen 12 umgeben, der nicht brennbares Material aufweist, der Dämmstreifen 12 ist vollständig um das Blähmaterial 14 umgeschlagen und auf der Außenseite entlang einer Klebe-, Näh- oder Schweißnaht 95 mit sich selbst verbunden. Zum Ausbilden der nicht brennbaren und flexiblen Stabilisatorelemente in Form von rechteckigen Klapplaschen 91 sind wiederum U-förmige Schlitze 93 in den Dämmstreifen 12 eingebracht, so wie dies auch bei der Ausführungsform nach Fig. 6 der Fall ist.

Selbstverständlich lässt sich die in Fig. 9 dargestellte Ausführungsform auch mit anderen vorstehend beschriebenen Stabilisatorelementen kombinieren, beispielsweise mit solchen, wie sie in den Ausführungsformen der Fig. 5, 7 und 8 dargestellt sind.

## Patentansprüche

1. Brandschutz-Manschette für Rohre und Kanäle, die eine Mittelachse (11), eine Innenseite (I) und eine Außenseite (A) definiert, und die ein sich bei Hitzeeinwirkung aufblähendes Blähmaterial (14) und keine metallischen Teile aufweist, wobei
auf der Innenseite (I) des Blähmaterials (14) in ausgewählten Bereichen zumindest ein Stabilisatorelement (11, 21, 31, 41, 51, 61, 71, 81, 91) aus flexiblem und nicht brennbarem Material vorgesehen ist, das im Brandfall das sich aufblähende Blähmaterial (14) stabilisiert, und
an der Außenseite der Brandschutz-Manschette ein Dämmstreifen (12) vorgesehen ist, der als Stabilisatorelement zumindest einen Gelenkabschnitt (11, 21, 31, 41, 51, 61, 91) aufweist, der zwischen dem Blähmaterial (14) und der Mittelachse (M) angeordnet ist, und der im Brandfall von dem Blähmaterial (14) in Richtung der Mittelachse (M) geklappt wird,
**dadurch gekennzeichnet, dass**
der Dämmstreifen (12) mehrere Gelenkabschnitte in Form von einzelnen Laschen (11, 21, 31, 41, 51, 61, 91) aufweist, die umgeschlagen sind, und die im Brandfall eine Verbindung mit dem Blähmaterial eingehen.

2. Brandschutz-Manschette nach Anspruch 1,
**dadurch gekennzeichnet, dass**
der Gelenkabschnitt (11, 21, 31, 41, 51, 61, 91) dadurch gebildet ist, dass der Dämmstreifen (12) entlang eines Randes der Manschette zumindest abschnittsweise von außen nach innen und um das Blähmaterial (14) umgeschlagen ist.

3. Brandschutz-Manschette nach Anspruch 1,
**dadurch gekennzeichnet, dass**
der Gelenkabschnitt (11) dadurch gebildet ist, dass der Dämmstreifen (12) entlang des gesamten Innenumfangs der Brandschutz-Manschette umgeschlagen ist.

4. Brandschutz-Manschette nach zumindest einem der vorstehenden Ansprüche 1 - 3,
**dadurch gekennzeichnet, dass**
die axiale Länge (L_{B}) des Gelenkabschnitts mindestens 25%, insbesondere mindestens 30%, insbesondere mindestens 40 % und insbesondere zumindest 50 % der axialen Länge (L_{D}) des Blähmaterials (14) beträgt, und/oder dass die axiale Länge (L_{B}) des Gelenkabschnitts nicht mehr als 60% des Innendurchmessers der Brandschutz-Manschette beträgt.

5. Brandschutz-Manschette nach zumindest einem der vorstehenden Ansprüche 1 - 4,
**dadurch gekennzeichnet, dass**
die axiale Länge (L_{B}) des Gelenkabschnitts mindestens 15%, insbesondere mindestens 20%, insbesondere mindestens 25 % und insbesondere zumindest 30 % des Innendurchmessers der Brandschutz-Manschette beträgt.

6. Brandschutz-Manschette nach zumindest einem der vorstehenden Ansprüche 1 - 5,
**dadurch gekennzeichnet, dass**
die axiale Länge des umgeschlagenen Gelenkabschnitts so gewählt ist, dass dieser den lichten Innenquerschnitt der Manschette nach einem Aufquellen des Blähmaterials um zumindest 40%, insbesondere zumindest 50% verkleinert.

7. Brandschutz-Manschette nach zumindest einem der vorstehenden Ansprüche 1 - 6,
**dadurch gekennzeichnet, dass** der
Gelenkabschnitt (11, 21, 31, 41, 51, 61, 91) durch Aufblähen des Blähmaterials (14) um etwa 30° - 150° in Richtung der Mittelachse zurückklappt, und/oder dass mehrere Gelenkabschnitte (11, 21, 31, 41, 51, 61, 91) nach einem Zurückklappen überlappen, wobei diese insbesondere nach einem Zurückklappen einen aus seitlich aneinandergrenzenden Abschnitten (18) gebildeten Bereich bilden.

8. Brandschutz-Manschette nach zumindest einem der vorhergehenden Ansprüche 1 - 7,
**dadurch gekennzeichnet, dass**
mehrere Gelenkabschnitte nach einem Zurückklappen seitlich beabstandet sind.

9. Brandschutz-Manschette nach zumindest einem der vorhergehenden Ansprüche 1 - 8,
**dadurch gekennzeichnet, dass**
sich der Gelenkabschnitt (11, 21, 31, 41, 51, 61, 71, 81, 91) nicht über die gesamte axiale Länge des Blähmaterials erstreckt.

10. Brandschutz-Manschette nach zumindest einem der vorhergehenden Ansprüche,
**dadurch gekennzeichnet, dass**
das flexible und nicht brennbare Material (12) ein Fasermaterial, insbesondere einen Vlies, und/oder einen mineralischen Baustoff aufweist.

11. Brandschutz-Manschette nach zumindest einem der vorhergehenden Ansprüche 1 - 10,
**dadurch gekennzeichnet, dass**
zumindest ein Gelenkabschnitt (51, 53) um eine parallel zur Mittelachse (M) verlaufende Gelenkachse klappbar ist.

12. Brandschutz-Manschette nach zumindest einem der vorhergehenden Ansprüche 1 - 11,
**dadurch gekennzeichnet, dass**
in dem Dämmstreifen (12) zumindest eine Radialöffnung vorgesehen ist, die von mehreren Gelenkabschnitten (51, 53) verschlossen ist.

13. Brandschutz-Manschette nach zumindest einem der vorhergehenden Ansprüche,
**dadurch gekennzeichnet, dass**
das zumindest eine Stabilisatorelement durch einen insbesondere wellenförmigen Streifen (71, 81) gebildet ist, der an der Innenseite des Blähmaterials (14) befestigt ist, und der sich insbesondere zumindest überwiegend in Umfangsrichtung erstreckt.

## Claims

1. A fire protection sleeve for pipes and ducts which defines a central axis (11), an inner side (I) and an outer side (A), which has a swelling material (14) swelling under the effect of heat and which does not have any metallic parts, wherein
at least one stabilizer element (11, 21, 31, 41, 51, 61, 71, 81, 91) composed of a flexible and non-combustible material is provided at the inner side (I) of the swelling material (14) in selected regions and, in the event of a fire, stabilizes the swelling material (14) which swells; and
an insulating strip (12) is provided at the outer side of the fire protection sleeve, said insulating strip (12), as a stabilizer element, having at least one joint section (11, 21, 31, 41, 51, 61, 91), which is arranged between the swelling material (14) and the central axis (M), and being folded in the direction of the central axis (M) by the swelling material (14) in the event of a fire,
**characterized in that**
the insulating strip (12) has a plurality of joint sections in the form of individual flaps (11, 21, 31, 41, 51, 61, 91) which are folded over and which enter into a connection with the swelling material in the event of a fire.

2. A fire protection sleeve in accordance with claim 1,
**characterized in that**
the joint section (11, 21, 31, 41, 51, 61, 91) is formed **in that** the insulating strip (12) is folded over along a margin of the sleeve at least sectionally from the outside to the inside and around the swelling material (14).

3. A fire protection sleeve in accordance with claim 1,
**characterized in that**
the joint section (11) is formed **in that** the insulating strip (12) is folded over along the total inner periphery of the fire protection sleeve.

4. A fire protection sleeve in accordance with at least one of the preceding claims 1 to 3,
**characterized in that**
the axial length (L_{B}) of the joint section amounts to at least 25%, in particular to at least 30%, in particular to at least 40%, and in particular to at least 50% of the axial length (L_{D}) of the swelling material (14); and/or **in that** the axial length (L_{B}) of the joint section amounts to no more than 60% of the inner diameter of the fire protection sleeve.

5. A fire protection sleeve in accordance with at least one of the preceding claims 1 to 4,
**characterized in that**
the axial length (L_{B}) of the joint section amounts to at least 15%, in particular to least 20%, in particular to at least 25%, and in particular to at least 30% of the inner diameter of the fire protection sleeve.

6. A fire protection sleeve in accordance with at least one of the preceding claims 1 to 5,
**characterized in that**
the axial length of the folded-over joint section is selected such that it reduces the clear inner cross-section of the sleeve by at least 40%, in particular by at least 50%, after a swelling of the swelling material.

7. A fire protection sleeve in accordance with at least one of the preceding claims 1 to 6,
**characterized in that**
the joint section (11, 21, 31, 41, 51, 61, 91) folds back by approximately 30° - 150° in the direction of the central axis by the swelling of the swelling material (14); and/or **in that** a plurality of joint sections (11, 21, 31, 41, 51, 61, 91) overlap after a folding back, with, in particular after a folding back, said joint sections forming a region formed from laterally adjoining sections (18).

8. A fire protection sleeve in accordance with at least one of the preceding claims 1 to 7,
**characterized in that**
a plurality of joint sections are laterally spaced apart after a folding back.

9. A fire protection sleeve in accordance with at least one of the preceding claims 1 to 8,
**characterized in that**
the joint section (11, 21, 31, 41, 51, 61, 71, 81, 91) does not extend over the total axial length of the swelling material.

10. A fire protection sleeve in accordance with at least one of the preceding claims,
**characterized in that**
the flexible and non-combustible material (12) comprises a fiber material, in particular a fleece, and/or a mineral building material.

11. A fire protection sleeve in accordance with at least one of the preceding claims 1 to 10,
**characterized in that**
at least one joint section (51, 53) can be folded about a joint axis extending in parallel with the central axis (M).

12. A fire protection sleeve in accordance with at least one of the preceding claims 1 to 11,
**characterized in that**
at least one radial opening is provided in the insulating strip (12) and is closed by a plurality of joint sections (51, 53).

13. A fire protection sleeve in accordance with at least one of the preceding claims,
**characterized in that**
the at least one stabilizer element is formed by a strip (71, 81), in particular a wave-like strip (71, 81), which is fastened to the inner side of the swelling material (14) and which in particular extends at least predominantly in the peripheral direction.

## Revendications

1. Manchette coupe-feu pour tubes et canaux, qui définit un axe central (11), une face intérieure (I) et une face extérieure (A) et qui comprend un matériau gonflable (14) gonflant sous l'effet de chaleur et qui est dépourvu de pièces métalliques,
dans laquelle
sur la face intérieure (I) du matériau gonflable (14), dans des zones choisies, il est prévu au moins un élément stabilisateur (11, 21, 31, 41, 51, 61, 71, 81, 91) en matériau flexible et incombustible qui stabilise le matériau gonflable (14) en cas d'incendie, et
sur la face extérieure de la manchette coupe-feu, il est prévu une bande isolante (12) qui présente comme élément stabilisateur au moins une portion d'articulation (11, 21, 31, 41, 51, 61, 91) qui est disposée entre le matériau gonflable (14) et l'axe central (M), et qui, en cas d'incendie, est rabattue par le matériau gonflable (14) en direction de l'axe central (M),
**caractérisée en ce que**
la bande isolante (12) comprend plusieurs portions d'articulation sous la forme de pattes individuelles (11, 21, 31, 41, 51, 61, 91) qui sont repliées et qui, en cas d'incendie, établissent une liaison avec le matériau gonflable.

2. Manchette coupe-feu selon la revendication 1,
**caractérisée en ce que**
la portion d'articulation (11, 21, 31, 41, 51, 61, 91) est formée du fait que la bande isolante (12) est repliée au moins localement de l'extérieur vers l'intérieur le long d'un bord de la manchette et autour du matériau gonflable (14).

3. Manchette coupe-feu selon la revendication 1,
**caractérisée en ce que**
la portion d'articulation (11) est formée du fait que la bande isolante (12) est repliée le long de toute la circonférence intérieure de la manchette coupe-feu.

4. Manchette coupe-feu selon l'une au moins des revendications précédentes 1 à 3,
**caractérisée en ce que**
la longueur axiale (L_{B}) de la portion d'articulation est d'au moins 25%, en particulier d'au moins 30%, en particulier d'au moins 40% et en particulier d'au moins 50% de la longueur axiale (L_{D}) du matériau gonflable (14), et/ou **en ce que**
la longueur axiale (L_{B}) de la portion d'articulation n'est pas supérieure à 60% du diamètre intérieur de la manchette coupe-feu.

5. Manchette coupe-feu selon l'une au moins des revendications précédentes 1 à 4,
**caractérisée en ce que**
la longueur axiale (L_{B}) de la portion d'articulation est d'au moins 15%, en particulier d'au moins 20%, en particulier d'au moins 25% et en particulier d'au moins 30% du diamètre intérieur de la manchette coupe-feu.

6. Manchette coupe-feu selon l'une au moins des revendications précédentes 1 à 5,
**caractérisée en ce que**
la longueur axiale de la portion d'articulation repliée est choisie de telle sorte que celle-ci réduit la section transversale intérieure libre de la manchette d'au moins 40%, en particulier d'au moins 50%, après gonflement du matériau gonflable.

7. Manchette coupe-feu selon l'une au moins des revendications précédentes 1 à 6,
**caractérisée en ce que**
la portion d'articulation (11, 21, 31, 41, 51, 61, 91) se rabat d'environ 30° à 150° dans la direction de l'axe central par gonflement du matériau gonflable (14), et/ou **en ce que**
plusieurs portions d'articulation (11, 21, 31, 41, 51, 61, 91) se chevauchent après le rabattement, celles-ci formant, en particulier après un rabattement, une zone formée par des portions (18) latéralement adjacentes.

8. Manchette coupe-feu selon l'une au moins des revendications précédentes 1 à 7,
**caractérisée en ce que**
plusieurs portions d'articulation sont espacées latéralement après un rabattement.

9. Manchette coupe-feu selon l'une au moins des revendications précédentes 1 à 8,
**caractérisée en ce que**
la portion d'articulation (11, 21, 31, 41, 51, 61, 71, 81, 91) ne s'étend pas sur toute la longueur axiale du matériau gonflable.

10. Manchette coupe-feu selon l'une au moins des revendications précédentes,
**caractérisée en ce que**
le matériau flexible et incombustible (12) comprend un matériau fibreux, en particulier un non-tissé, et/ou un matériau de construction minéral.

11. Manchette coupe-feu selon l'une au moins des revendications précédentes 1 à 10,
**caractérisée en ce que**
au moins une portion d'articulation (51, 53) est rabattable autour d'un axe d'articulation s'étendant parallèlement à l'axe central (M).

12. Manchette coupe-feu selon l'une au moins des revendications précédentes 1 à 11,
**caractérisée en ce que**
dans la bande isolante (12), il est prévu au moins une ouverture radiale qui est fermée par plusieurs portions d'articulation (51, 53).

13. Manchette coupe-feu selon l'une au moins des revendications précédentes,
**caractérisée en ce que**
ledit au moins un élément stabilisateur est formé par une bande (71, 81) en particulier ondulée, qui est fixée sur la face intérieure du matériau gonflable (14) et qui s'étend en particulier au moins principalement dans la direction circonférentielle.
